# FASCICULE DE BREVET EUROPEEN

(11) **EP 4 304 940 B1**
(45) Date de publication et mention de la délivrance du brevet: **23.04.2025**
(21) Numéro de dépôt: 22711085.5
(22) Date de dépôt: 28.02.2022
(51) Int. Cl.: B64F 1/00, B63B 35/50, B63G 11/00

(54) **SYSTÈME DE CONTRÔLE DE CONDITIONS AÉRAULIQUES AU-DESSUS D'UNE ZONE D'ATTÉRRISSAGE OU D'APPONTAGE**
SYSTEM ZUR STEUERUNG VON LUFTFAHRTBEDINGUNGEN ÜBER EINER LANDE- ODER LANDUNGSZONE
SYSTEM FOR CONTROLLING AERAULIC CONDITIONS ABOVE A LANDING OR DECK-LANDING ZONE

(30) Priorité: 10.03.2021 FR 2102253
(43) Date de publication de la demande: 17.01.2024
(73) Titulaire: Office National d'Etudes et de Recherches Aérospatiales, 91120 Palaiseau (FR)
(72) Inventeur: GALLAS, Quentin, 91120 PALAISEAU (FR); DERHILLE, Elvina, 91120 PALAISEAU (FR)
(74) Mandataire: Hautier IP
(86) Numéro de dépôt international: PCT/FR2022/050350
(87) Numéro de publication internationale: WO 2022/189723

(56) Documents cités:
- EP-A1- 2 843 420
- DE-A1- 102015 004 086
- FR-A1- 2 912 159
- RU-C1- 2 088 487

## Description

### Domaine technique

La présente description concerne un système de contrôle de conditions aérauliques qui sont présentes au-dessus d'une zone d'atterrissage ou d'appontage.

### Technique antérieure

L'atterrissage d'aéronefs tels que des hélicoptères ou des drones de type multicoptères peut être perturbé ou rendu difficile par des conditions d'écoulement d'air qui génèrent des recirculations et/ou des tourbillons d'air. De telles conditions apparaissent notamment lorsque la zone d'atterrissage est située à proximité d'une superstructure qui constitue un obstacle à l'écoulement du vent. Lorsque la superstructure est située du côté de la provenance du vent par rapport à la zone d'atterrissage, et lorsque la vitesse du vent est suffisante, une bulle de recirculation d'air apparaît au-dessus de la zone d'atterrissage. La direction et la vitesse d'écoulement de l'air varient alors sur des distances très courtes à l'intérieur d'une telle bulle de recirculation d'air, de sorte que la phase terminale de l'atterrissage devient difficile ou dangereuse. De façon connue, des tourbillons d'air continus ou intermittents peuvent aussi apparaître à partir d'angles supérieurs de la superstructure, et causer des perturbations supplémentaires de l'atterrissage.

Ces difficultés peuvent être particulièrement critiques pour un appontage d'aéronef sur un navire, par exemple une frégate porte-hélicoptère. En effet, le navire peut présenter une superstructure qui est proche de la zone d'appontage, et la vitesse relative du vent par rapport à la zone d'appontage peut être importante, notamment lorsque le navire se déplace en pleine mer. Selon une configuration usuelle de frégate, dite à pont arrière, la zone d'appontage de l'hélicoptère est située sur le pont arrière de la frégate, derrière un hangar qui constitue une superstructure par rapport au niveau de la zone d'appontage. Toutefois, de multiples autres aménagements qui sont destinés à permettre l'arrivée d'un aéronef présentent des configurations similaires, avec les mêmes difficultés et dangers qui en résultent pour la phase terminale de l'arrivée de l'aéronef.

Le document DE 10 2015 004086 A1 concerne un dispositif pour déplacer un hélicoptère sur une surface d'appontage, qui est muni de moyens de mesure de la vitesse et de la direction du vent.

Le document FR 2 912 159 A1 concerne une plateforme d'atterrissage d'hélicoptère, qui est pliable, sur un navire.

Le document RU 2 088 487 C1 divulgue un système de mesure anémométrique pour mesurer le vent devant un navire après qu'un aéronef a apponté sur une plateforme de ce navire.

### Problème technique

Un but de la présente invention est alors de faciliter et/ou sécuriser l'atterrissage ou l'appontage d'un aéronef pour une telle configuration d'environnement de la zone d'atterrissage ou d'appontage.

Un but annexe de l'invention est de procurer une telle amélioration des conditions d'atterrissage ou d'appontage tout en minimisant une consommation d'énergie qui est utilisée pour cela.

Un autre but annexe est de fournir un système pour sécuriser l'atterrissage ou l'appontage d'un aéronef, qui soit robuste, simple à mettre en œuvre, et qui puisse être implanté facilement à bord d'un navire, notamment à bord d'une frégate porte-hélicoptère.

### Résumé de l'invention

Pour atteindre l'un au moins de ces buts ou un autre, un premier aspect de l'invention propose un système de contrôle de conditions aérauliques qui sont présentes au-dessus d'une surface d'atterrissage ou d'appontage d'aéronef, appelée zone d'arrivée aérienne. Le système est adapté pour être utilisé lorsque la zone d'arrivée aérienne est située à proximité d'une superstructure, selon un axe d'alignement qui est orienté de la zone d'arrivée aérienne vers la superstructure, la superstructure dépassant verticalement plus haut que la zone d'arrivée aérienne et étant susceptible d'altérer un écoulement du vent au-dessus de la zone d'arrivée aérienne. Ce système comprend :
- des moyens anémométriques, adaptés pour fournir des valeurs de vitesse et de gisement qui caractérisent une vitesse relative du vent par rapport à la zone d'arrivée aérienne et la superstructure ;
- des moyens aérauliques, qui sont agencés à proximité de la zone d'arrivée aérienne, et capables de modifier des déplacements d'air au-dessus de cette zone d'arrivée aérienne ; et
- un contrôleur, adapté pour activer les moyens aérauliques lorsque la valeur de vitesse qui est fournie par les moyens anémométriques est supérieure à un premier seuil non-nul, et/ou la valeur de gisement qui est aussi fournie par les moyens anémométriques est inférieure à un second seuil non-nul en valeur absolue.

Ainsi, le système de l'invention est capable d'améliorer des conditions d'atterrissage ou d'appontage de l'aéronef sur la zone d'arrivée aérienne lorsque la vitesse relative du vent par rapport à cette zone est élevée, ou que son gisement est faible ou pas trop important. Autrement dit, les moyens aérauliques sont activés pour une sélection de conditions d'atterrissage ou d'appontage qui sont défavorables, et peuvent être maintenus inactifs lorsque les conditions aérauliques qui résultent du vent et de la position de la superstructure par rapport au vent et à la zone d'arrivée aérienne n'appartiennent pas à cette sélection. La consommation d'énergie par le système de l'invention est ainsi limitée à des conditions de vent - force et orientation du vent - pour lesquelles il est utile et efficace.

Le premier seuil, auquel la valeur de vitesse du vent est comparée pour activer éventuellement les moyens aérauliques, peut être compris entre 5 m·s⁻¹ (mètre par seconde) et 20 m·s⁻¹, et le second seuil, qui concerne la valeur de gisement, peut être compris entre 0° (degré) et 90°.

Les moyens anémométriques peuvent être adaptés pour mesurer les valeurs de vitesse et de gisement qui caractérisent la vitesse relative du vent par rapport à la zone d'arrivée aérienne et la superstructure. Autrement dit, ce peut être des capteurs qui mesurent initialement, en temps réel ou à des instants prédéfinis la vitesse et le gisement du vent. Dans le cadre de l'invention, le gisement du vent désigne l'angle que forme avec l'axe d'alignement dans un plan horizontal, une direction qui est parallèle à l'écoulement du vent tel que cet écoulement existe en l'absence de la superstructure, et qui est orientée vers l'amont de cet écoulement du vent.

Alternativement, les moyens anémométriques peuvent être adaptés pour fournir les valeurs de vitesse et de gisement du vent à partir de données météorologiques qui sont reçues par ailleurs, et en combinant éventuellement ces données météorologiques avec des données de position, d'orientation et de déplacement de l'ensemble qui incorpore la superstructure et la zone d'arrivée aérienne.

De façon générale pour l'invention, et en l'absence d'indication contraire, la vitesse et le gisement du vent concerne le vent tel qu'il apparaît dans un référentiel qui est lié à la superstructure et à la zone d'arrivée aérienne. Dans des cas où l'ensemble qui regroupe cette superstructure et cette zone d'arrivée aérienne est immobile sur Terre, la vitesse et le gisement du vent utilisés pour l'invention sont relatifs au référentiel terrestre. Dans d'autres cas où l'ensemble de la superstructure et de la zone d'arrivée aérienne est mobile sur Terre, la vitesse et le gisement du vent qui sont utilisés pour l'invention sont ceux qui existent dans le référentiel qui est lié à cet ensemble, leurs valeurs en étant alors différentes de celles relatives au référentiel terrestre.

Les moyens aérauliques peuvent comprendre, de façon non-limitative, des moyens de soufflage continu ou intermittent, y compris des obturateurs et des moyens d'orientation de jets d'air, des moyens d'aspiration continue ou intermittente, des moyens de déflexion de flux d'air, etc. Ils sont avantageusement disposés à au moins un endroit d'un pourtour d'une face de la superstructure qui est tournée vers la zone d'arrivée aérienne. Pour des réalisations de l'invention qui utilisent des moyens de soufflage, une valeur de vitesse de soufflage d'air qui est produite par ceux-ci peut être comprise entre 0,4 fois et 3 fois la vitesse du vent telle que fournie par les moyens anémométriques. Cette valeur de vitesse de soufflage d'air peut notamment être ajustée par le contrôleur du système.

Des premiers modes de réalisation de l'invention peuvent être plus particulièrement destinés à limiter une extension verticale d'une bulle de recirculation d'air qui est générée par le vent au-dessus de la zone d'arrivée aérienne. Pour cela, les moyens aérauliques peuvent comprendre des moyens de soufflage et/ou d'aspiration disposés le long d'un bord supérieur sensiblement horizontal, et possiblement aussi le long de bords latéraux sensiblement verticaux, de la face de la superstructure qui est tournée vers la zone d'arrivée aérienne. Le contrôleur est alors adapté pour activer les moyens aérauliques lorsque la valeur de vitesse fournie par les moyens anémométriques est supérieure au premier seuil, et lorsque la valeur absolue du gisement fournie par les moyens anémométriques est inférieure à un troisième seuil, de façon à abaisser une limite supérieure de la bulle de recirculation d'air, ou pour augmenter une inclinaison vers le bas de cette limite supérieure à partir du bord supérieur de la face de la superstructure. Ainsi, une partie de la zone d'arrivée aérienne qui est la plus éloignée de la superstructure devient dégagée de la bulle de recirculation d'air. Les conditions d'atterrissage ou d'appontage dans cette partie de la zone d'arrivée aérienne sont améliorées de cette façon. Pour de tels premiers modes de réalisation de l'invention, le troisième seuil peut être compris entre 0° et 10°.

Des deuxièmes modes de réalisation de l'invention peuvent être plus particulièrement destinés à repousser transversalement la bulle de recirculation d'air qui est générée par le vent au-dessus de la zone d'arrivée aérienne. Pour cela, les moyens aérauliques peuvent comprendre des moyens de soufflage et/ou d'aspiration disposés le long des bords latéraux sensiblement verticaux de la face de la superstructure qui est tournée vers la zone d'arrivée aérienne. Le contrôleur est alors adapté pour activer au moins une partie des moyens aérauliques lorsque la valeur de vitesse fournie par les moyens anémométriques est supérieure à un quatrième seuil non-nul, et lorsque la valeur du gisement fournie par les moyens anémométriques est supérieure à un cinquième seuil non-nul et inférieure à 90°, en valeur absolue. De cette façon, un angle qui existe entre la face de la superstructure qui est tournée vers la zone d'arrivée aérienne et une limite de la bulle de recirculation d'air, est réduit. La bulle de recirculation d'air est alors contenue dans cet angle, qui est mesuré au niveau de celui des bords latéraux sensiblement verticaux qui est du même côté que la direction de provenance du vent par rapport à l'axe d'alignement. Ainsi, un secteur angulaire latéral de la zone d'arrivée aérienne qui est situé du même côté de l'axe d'alignement que la direction de provenance du vent, dit situé au vent, devient dégagé de la bulle de recirculation d'air. Les conditions d'atterrissage ou d'appontage sont alors de nouveau améliorées, quoique que d'une façon qui est différente de celle des premiers modes de réalisation de l'invention. Pour de tels deuxièmes modes de réalisation de l'invention, le quatrième seuil peut être compris entre 5 m·s⁻¹ et 20 m·s⁻¹, et le cinquième seuil peut être compris entre 10° et 90°. Eventuellement, le contrôleur peut être adapté pour n'activer qu'une partie des moyens de soufflage et/ou d'aspiration qui sont disposés le long des bords latéraux sensiblement verticaux, cette partie des moyens de soufflage et/ou d'aspiration qui est activée pouvant être déterminée par le contrôleur en fonction de la valeur de gisement du vent.

Enfin, des troisièmes modes de réalisation de l'invention peuvent être plus particulièrement destinés à perturber des tourbillons qui sont générés par le vent à partir des angles latéraux supérieurs de la face de la superstructure. Pour cela, les moyens aérauliques peuvent comprendre des moyens de soufflage et/ou d'aspiration disposés à des angles latéraux supérieurs de la face de la superstructure qui est tournée vers la zone d'arrivée aérienne. Dans ce cas, le contrôleur est adapté pour activer les moyens aérauliques lorsque la valeur de vitesse fournie par les moyens anémométriques est supérieure à un sixième seuil non-nul, et la valeur du gisement fournie par les moyens anémométriques est inférieure à 5° en valeur absolue, de façon à perturber les tourbillons. Pour de tels troisièmes modes de réalisation de l'invention, le sixième seuil peut être compris entre 5 m·s⁻¹ et 20 m·s⁻¹.

De façon générale pour l'invention, le contrôleur peut être adapté pour ajuster en temps réel un fonctionnement des moyens aérauliques en fonction de valeurs de pression mesurées répétitivement par des moyens barométriques qui sont situés à proximité de la zone d'arrivée aérienne.

Selon une autre possibilité, le contrôleur détermine le fonctionnement des moyens aérauliques en fonction de valeurs fournies initialement par les moyens anémométriques, et éventuellement aussi par les moyens barométriques, puis commande une exécution de ce fonctionnement en boucle ouverte.

Des paramètres additionnels tels qu'une caractérisation de l'état de la mer peuvent aussi être pris en compte pour déterminer ou ajuster le fonctionnement des moyens aérauliques lorsque l'invention est utilisée à bord d'un navire.

Enfin, un second aspect de l'invention propose une structure aménagée qui comprend :
- une zone d'arrivée aérienne, adaptée pour qu'un aéronef, en particulier un hélicoptère ou un drone à axes de rotors verticaux, se pose sur cette zone d'arrivée aérienne ;
- une superstructure qui est située à proximité de la zone d'arrivée aérienne, cette superstructure dépassant verticalement plus haut que la zone d'arrivée aérienne et étant susceptible d'altérer l'écoulement du vent au-dessus de cette dernière ; et
- un système de contrôle des conditions aérauliques qui sont présentes au-dessus de la zone d'arrivée aérienne, ce système étant conforme au premier aspect de l'invention.

Une telle structure aménagée peut constituer une partie d'un navire, notamment une partie d'un pont arrière de navire, une partie d'une plateforme d'appontage et de décollage d'un porte-avion, une partie d'une plateforme de haute mer, aussi appelée plateforme off-shore, une partie d'un immeuble, notamment lorsque la structure est située sur une tour ou un bâtiment d'hôpital, et une partie d'un aéroport, aérodrome ou héliport.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1a] illustre une application de l'invention à un navire porte-hélicoptère ;
[Fig. 1b] est une vue en plan qui montre des directions utiles pour l'invention ;
[Fig. 2] est un schéma en perspective qui montre une bulle de recirculation d'air et des tourbillons générés par du vent derrière une superstructure, ainsi que des positions de capteurs anémométriques et barométriques utiles pour l'invention ;
[Fig. 3a] est un schéma en vue de côté qui illustre une efficacité d'un système conforme à l'invention pour des premiers fonctionnements possibles ;
[Fig. 3b] est un schéma en vue en plan qui illustre une efficacité d'un système conforme à l'invention pour des deuxièmes fonctionnements possibles ;
[Fig. 3c] correspond à [Fig. 3b] pour des troisièmes fonctionnements possibles ; et
[Fig. 4] est un diagramme synoptique d'étapes de fonctionnement pour un système conforme à l'invention.

### Description détaillée de l'invention

Pour raison de clarté, les dimensions des éléments qui sont représentés dans les figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

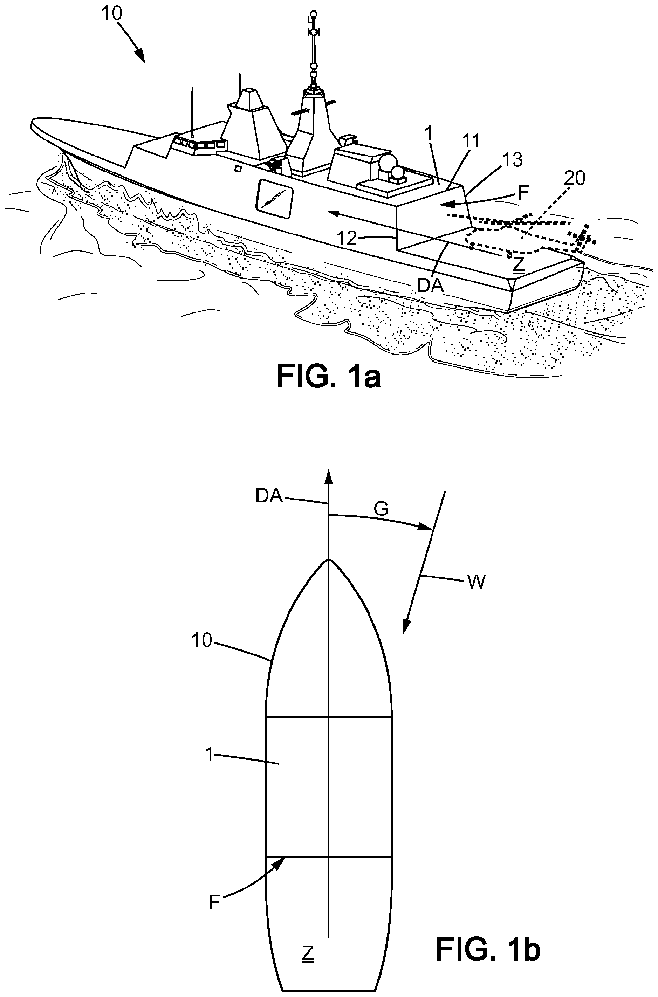

L'invention est décrite maintenant dans le cas d'une application à une frégate porte-hélicoptère du type à pont arrière, à titre d'illustration. Un tel navire est désigné par la référence 10 dans [Fig. 1a] et [Fig. 1b]. Il comprend une zone d'arrivée aérienne Z sur laquelle peut apponter un hélicoptère 20. Cette zone d'arrivée aérienne Z est constituée par une surface de pont horizontale, qui est située dans une partie arrière du navire 10. Le navire 10 comporte en outre une superstructure 1 dans sa partie centrale, si bien que la zone d'arrivée aérienne Z est située juste derrière la superstructure 1 par rapport à l'axe du navire 10. DA désigne l'axe d'alignement de la superstructure 1 avec la zone d'arrivée aérienne Z, orienté de la zone d'arrivée aérienne Z vers la superstructure 1. La superstructure 1 possède une face F qui est tournée vers la zone d'arrivée aérienne Z, et qui est sensiblement verticale. Les références 11, 12 et 13 désignent respectivement le bord supérieur de la face F, qui est sensiblement horizontal, et les deux bords latéraux de la face F, qui sont sensiblement verticaux. Pour le navire 10, la direction DA peut correspondre à sa direction longitudinale, de l'arrière vers l'avant, le bord latéral 12 est sur le côté bâbord, et le bord latéral 13 est sur le côté tribord. La superstructure 1 peut être un hangar embarqué.

Conformément à [Fig. 1b], W désigne la direction d'écoulement du vent au lieu où se trouve le navire 10, telle que cette direction d'écoulement du vent existe en l'absence du navire 10. Autrement dit, W ne tient pas compte de perturbations d'écoulement d'air que peut générer le navire 10, en particulier sa superstructure 1. G désigne l'angle de gisement du vent au lieu du navire 10 : il repère dans un plan horizontal la direction de provenance du vent à partir de l'axe d'alignement DA, en étant compté positivement du côté tribord et négativement du côté bâbord par exemple. En plus de son angle de gisement G, le vent est caractérisé par sa valeur de vitesse V telle qu'elle existe aussi sans tenir compte des perturbations qui sont générées par le navire 10 sur l'écoulement du vent. De façon générale pour l'invention, la vitesse V et le gisement G du vent sont déterminés dans un référentiel qui est lié à la superstructure 1 et la zone d'arrivée aérienne Z, ceux-ci ayant des positions relatives fixes l'un par rapport à l'autre. Autrement dit, dans le cas de l'application considérée au navire 10, la vitesse V et le gisement G du vent sont déterminés dans le référentiel du navire 10. En fonction d'un déplacement possible du navire 10 par rapport au référentiel terrestre, les valeurs à considérer pour l'invention pour la vitesse V du vent et son gisement G résultent de la soustraction vectorielle de la vitesse du navire 10 à celle du vent, telles que ces deux vitesses existent en tant que vecteurs dans le référentiel terrestre.

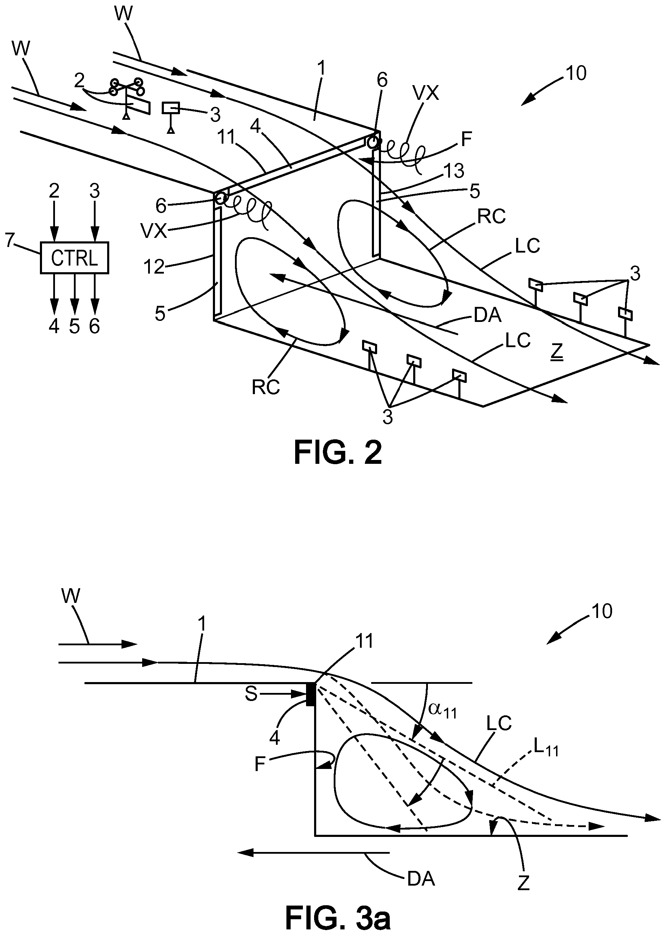

[Fig. 2] montre des perturbations de l'écoulement du vent qui sont provoquées par la superstructure 1 au-dessus de la zone d'arrivée aérienne Z. Ces perturbations sont montrées dans cette figure pour le cas où le gisement G est nul. Elles apparaissent lorsque la vitesse V du vent est suffisante.

Une première perturbation consiste en l'apparition d'une bulle de recirculation d'air, telle que désignée par RC dans la figure. Cette bulle de recirculation d'air RC apparaît dans l'angle rentrant formé par la zone d'arrivée aérienne Z avec la face F qui est tournée vers elle. Elle génère localement au-dessus de la zone d'arrivée aérienne Z un flux d'air vertical descendant qui peut être particulièrement dangereux pour l'hélicoptère 20 lors de son appontage. La bulle de recirculation d'air RC est limitée vers le haut par des lignes de courant LC qui proviennent du vent tel qu'existant au-dessus de la superstructure 1 et qui descendent progressivement au-dessus de la zone d'arrivée aérienne Z en direction de l'arrière du navire 10. Cette limite supérieure de la bulle de recirculation d'air RC, qui est issue du bord supérieur 11 de la face F, est désignée par la référence L₁₁ dans [Fig. 3a]. De façon similaire, la bulle de recirculation d'air RC possède deux limites latérales sur les côtés bâbord et tribord qui sont issues des bords latéraux 12 et 13, respectivement, de la face F.

Une seconde perturbation consiste en l'apparition de tourbillons VX à partir des angles supérieurs de la face F, à la jonction des bords 11 et 12 sur le côté bâbord et à la jonction des bords 11 et 13 sur le côté tribord. Ces tourbillons VX possèdent des cœurs qui s'étendent vers l'aval de l'écoulement du vent, et qui sont appelés tourbillons longitudinaux pour cette raison.

[Fig. 2] montre en outre des moyens anémométriques dont est équipé le navire 10 pour mettre en œuvre l'invention, afin de mesurer la vitesse V et le gisement G du vent. De façon connue, de tel moyens anémométriques peuvent comprendre une girouette et un moulinet à coupelles qui sont désignés conjointement par la référence 2. D'autres types connus d'anémomètres peuvent être utilisés alternativement, y compris un ou plusieurs anémomètre(s) à source laser. Ces moyens anémométriques peuvent avantageusement être situés sur la superstructure 1, afin de caractériser le vent dans le référentiel du navire 10 sans que les résultats de cette caractérisation soient significativement altérés par la présence du navire 10 lui-même.

Des sondes barométriques 3 peuvent optionnellement être ajoutées à bord du navire 10, notamment pour mesurer la pression de l'air au voisinage de la zone d'arrivée aérienne Z. De telles sondes barométriques peuvent être placées sur les côtés latéraux bâbord et tribord de la zone d'arrivée aérienne Z afin de caractériser des positions des limites de la bulle de recirculation d'air RC, mais aussi en plus sur la superstructure 1.

Pour l'invention, le navire 10 est équipé en outre de moyens aérauliques capables de modifier l'écoulement d'air qui est dû au vent au-dessus de la zone d'arrivée aérienne Z. Ces moyens aérauliques peuvent comprendre notamment des systèmes de soufflage et/ou d'aspiration (non-représentés), ainsi que des ouvertures ou fentes par lesquelles de l'air peut être soufflé ou aspiré. Dans [Fig. 2], la référence 4 désigne une fente de soufflage et/ou d'aspiration qui est située le long du bord supérieur 11 de la face F, les références 5 désignent deux fentes de soufflage et/ou d'aspiration qui sont situées le long des bords latéraux 12 et 13, respectivement, de la face F, et les références 6 désignent deux buses de soufflage qui sont situées respectivement aux angles supérieurs de la face F, c'est-à-dire à la jonction des bords 11 et 12 et à celle des bords 11 et 13. Possiblement, les moyens aérauliques peuvent en outre être adaptés pour modifier des directions des flux d'air qui sont soufflés ou aspirés à travers les fentes 4 et 5, ou éjectés par les buses 6.

De façon générale pour l'invention, les moyens aérauliques peuvent être constitués par tout type d'actionneurs fluidiques, tels que des jets pulsés, des jets synthétiques, des jets balayants, des systèmes de pompage ou des déflecteurs. Des jets pulsés, qui peuvent utiliser des mécanismes à vannes ou à clapets, et des jets synthétiques à membranes électromagnétiques peuvent être plutôt adaptés pour fonctionner à des fréquences qui sont comprises entre 5 Hz (hertz) et 500 Hz. Alternativement, des jets synthétiques à membranes piézoélectriques et des jets balayants peuvent être utilisés avec des fréquences de fonctionnement qui sont comprises entre 500 Hz et 3000 Hz. Des systèmes de pompage possibles sont ceux du type pompes à vide, et des déflecteurs possibles sont notamment à volets inclinables, à ventelles et/ou à réseaux en nid d'abeille orientables. Pour l'application de l'invention au navire 10, l'alimentation en énergie des moyens aérauliques peut être pilotée par le contrôleur électronique de puissance du navire, désigné par EPC pour «Electronic Power Control» en anglais, celui-ci étant alimenté en énergie par un réseau électrique dédié, par exemple à une tension électrique de 12-14 V (volt), soit à partir de batteries, soit en étant relié au réseau électrique interne du navire.

Un contrôleur 7, noté CTRL, est agencé pour commander les moyens aérauliques en fonction des valeurs qui sont fournies par les moyens anémométrique 2, et possiblement aussi en fonction de celles qui sont fournies par les sondes barométriques 3. D'autres données additionnelles qui peuvent aussi être prises en compte par le contrôleur 7 pour commander les moyens aérauliques sont des données météorologiques transmises par une source externe au navire 10, des données de déplacement du navire 10, des données qui caractérisent l'état de la mer, notamment des données qui caractérisent les mouvements de tangage, roulis et lacet du navire 10, des données qui concernent la trajectoire d'approche de l'hélicoptère 20 et sa position instantanée, des données qui caractérisent la taille et le poids de l'hélicoptère 20, etc. Le contrôleur 7 est conçu et connecté pour contrôler des débits d'air qui sont soufflés ou aspirés par chacune des fentes 4 et 5, et par chacune des buses 6. Dans le cas du navire 10, le contrôleur 7 peut être constitué par un module de l'unité de commande électronique de bord du navire, ou ECU pour «Electronic Control Unit» en anglais.

De façon générale, le contrôleur 7 n'active les moyens aérauliques pour modifier les déplacements d'air qui sont présents au-dessus de la zone d'arrivée aérienne Z que lorsque la vitesse V du vent est supérieure à un premier seuil, et/ou le gisement G est inférieur à un second seuil. Le premier seuil peut être compris entre 5 m·s⁻¹ et 20 m·s⁻¹, par exemple égal à 10 m·s⁻¹. Les valeurs de la vitesse V qui sont inférieures au premier seuil sont considérées comme insuffisantes pour que le vent perturbe significativement l'appontage de l'hélicoptère 20. Possiblement, le contrôleur 7 inhibe les moyens aérauliques aussi lorsque la valeur de la vitesse V est trop élevée, si le système est considéré comme insuffisamment efficace pour une telle valeur élevée. Par exemple, les moyens aérauliques peuvent être inhibés lorsque la vitesse V du vent est supérieure à 20 m·s⁻¹. Le second seuil, qui concerne le gisement G, est compris entre 0° et 90°, par exemple égal à 45°. Autrement dit, les moyens aérauliques ne sont activés que lorsque la direction de provenance du vent est située du côté de l'avant du navire 10. Les deux conditions d'activation des moyens aérauliques, sur la vitesse du vent et sur son gisement, peuvent être alternatives ou cumulatives.

De façon générale encore, le contrôleur 7 peut être conçu pour n'activer les moyens aérauliques que lorsqu'un aéronef est en approche pour apponter dans la zone d'arrivée aérienne Z, jusqu'à la fin de l'appontage. Possiblement, le contrôleur 7 peut être conçu pour activer ces moyens aérauliques aussi lorsqu'un aéronef qui est initialement posé sur la zone d'arrivée aérienne Z est prêt à décoller de façon imminente, et maintenir leur fonctionnement jusqu'à ce que cet aéronef ait dépassé une (des) valeur(s)-seuil(s) de distance d'éloignement par rapport au navire 10 et/ou d'altitude.

Chacun des trois fonctionnements qui sont décrits maintenant peut être activé que si la vitesse V du vent est supérieure au premier seuil comme indiqué ci-dessus, ou bien, pour certains au moins de ces fonctionnements, supérieure à un seuil supplémentaire qui est dédié à ce fonctionnement. Dans ce dernier cas, le seuil supplémentaire de vitesse V qui est dédié à ce fonctionnement est supérieur ou égal au premier seuil.

Le premier fonctionnement du système est adapté à des conditions pour lesquelles la valeur du gisement G est faible, par exemple inférieure à 8°, cette valeur de seuil de gisement correspondant au troisième seuil qui a été introduit dans la partie générale de la présente description. Autrement dit, ce premier fonctionnement est approprié lorsque la direction W du vent est superposée ou presque superposée avec l'axe d'alignement DA, en étant de sens opposé à ce dernier. Dans ce cas, les moyens aérauliques décrits plus haut peuvent être contrôlés par le contrôleur 7 pour souffler de l'air par la fente 4. Un tel soufflage par la fente 4 a pour effet de réduire la taille de la bulle de recirculation d'air RC, de sorte que la limite supérieure L₁₁ de celle-ci est abaissée en augmentant son inclinaison à partir du bord supérieur 11 de la face F. [Fig. 3a] montre une telle augmentation de l'inclinaison de la limite supérieure L₁₁ de la bulle de recirculation d'air RC. L'inclinaison de la limite supérieure L₁₁ est notée α₁₁, et mesurée par rapport à un plan qui est parallèle à celui de la zone d'arrivée aérienne Z. Dans cette figure, la référence S désigne le soufflage d'air. Il en résulte que les lignes de courant LC de l'écoulement du vent sont sensiblement horizontales dans une partie postérieure plus grande de la zone d'arrivée aérienne Z. De préférence, pour ce premier fonctionnement, de l'air peut aussi être soufflé par les deux fentes 5, en même temps que par la fente 4, pour réduire encore plus la taille de la bulle de recirculation d'air RC.

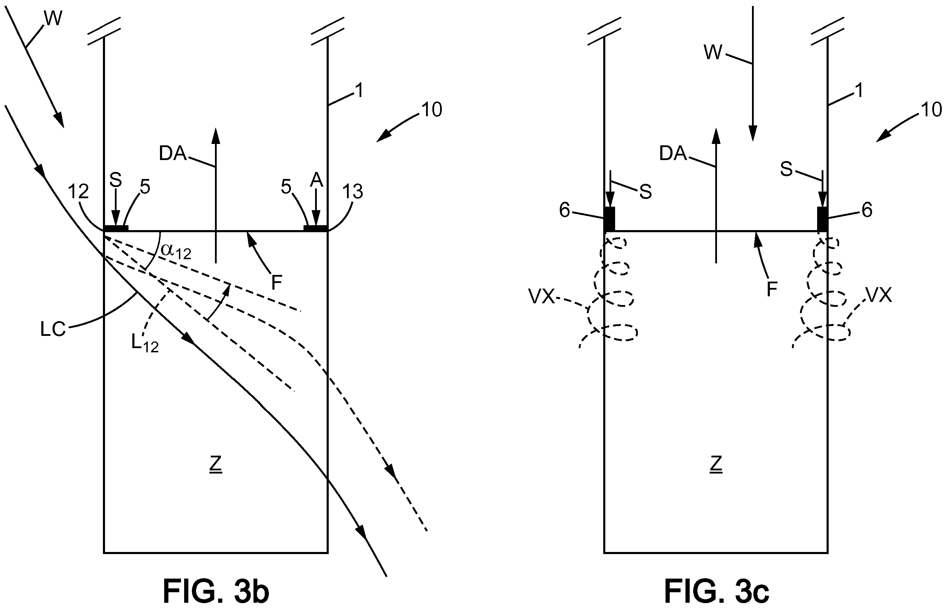

Le deuxième fonctionnement du système est adapté à des conditions pour lesquelles la valeur du gisement G est supérieure à celles concernées par le premier fonctionnement. Par exemple, ce second fonctionnement est approprié lorsque le gisement G est supérieur à 20°, cette autre valeur de seuil gisement correspondant au cinquième seuil qui a été introduit dans la partie générale de la présente description. Dans ce cas, les moyens aérauliques décrits plus haut peuvent être contrôlés par le contrôleur 7 pour souffler de l'air par celle des fentes 5 qui est du même côté de la face F que la direction de provenance du vent. Un tel soufflage a encore pour effet de réduire la taille de la bulle de recirculation d'air RC, mais en faisant tourner une limite latérale de celle-ci autour du bord vertical de la face F le long duquel le soufflage est effectué, en direction de la face F. Eventuellement, la bulle de recirculation d'air RC peut être réduite encore plus par une aspiration d'air simultanée qui est effectuée par l'autre fente 5, du côté opposé à celui d'où provient le vent. [Fig. 3b] illustre un tel deuxième fonctionnement, en montrant la rotation de la limite latérale L₁₂ de la bulle de recirculation d'air RC. α₁₂ désigne l'angle entre la limite latérale L₁₂ et la face F. La référence S désigne encore un soufflage d'air, et la référence A désigne une aspiration d'air. Possiblement, chacune des fentes latérales 5 peut être divisée en plusieurs segments successifs, et le nombre des segments qui sont utilisés pour le soufflage d'air S pour ce deuxième fonctionnement, et éventuellement aussi pour l'aspiration d'air A, peut être sélectionné par le contrôleur 7 en fonction de la valeur du gisement G.

Pour ces deux premiers fonctionnements, les sondes barométriques 3 peuvent être utilisées pour caractériser la taille de la bulle de recirculation d'air RC, et ajuster les débits de soufflage S ou d'aspiration A afin de réduire cette taille en deçà d'une dimension prédéterminée. Il est ainsi possible grâce au système de l'invention d'assurer qu'une partie suffisante de la zone d'arrivée aérienne Z ne soit pas sous la bulle de recirculation RC, afin que l'hélicoptère 20 puisse apponter en sécurité.

Le troisième fonctionnement du système est adapté à des conditions pour lesquelles la valeur du gisement G est très faible, par exemple inférieure à 5°. Possiblement, ce troisième fonctionnement peut être activé en même temps que le premier fonctionnement. Il consiste à souffler de l'air par les buses 6, afin de perturber les vortex VX qui sont formés par le vent à partir des angles supérieurs de la face F, aux jonctions des bords 11 et 12 et des bords 11 et 13. Un tel soufflage est efficace pour perturber les tourbillons d'air VX. Il peut être continu, mais de préférence intermittent, par exemple à une fréquence qui peut être ajustée en fonction de la valeur de Von Karman pour le sillage d'un obstacle arrondi. [Fig. 3c] illustre un tel troisième fonctionnement. Il est ainsi possible, encore grâce au système de l'invention, d'assurer que des tourbillons d'air ne soient pas susceptibles de perturber l'appontage de l'hélicoptère 20.

Pour tous ces fonctionnements, plusieurs modes sont possibles pour le contrôleur 7 : des modes de contrôle prédéterminé ou des modes de contrôle adaptatif.

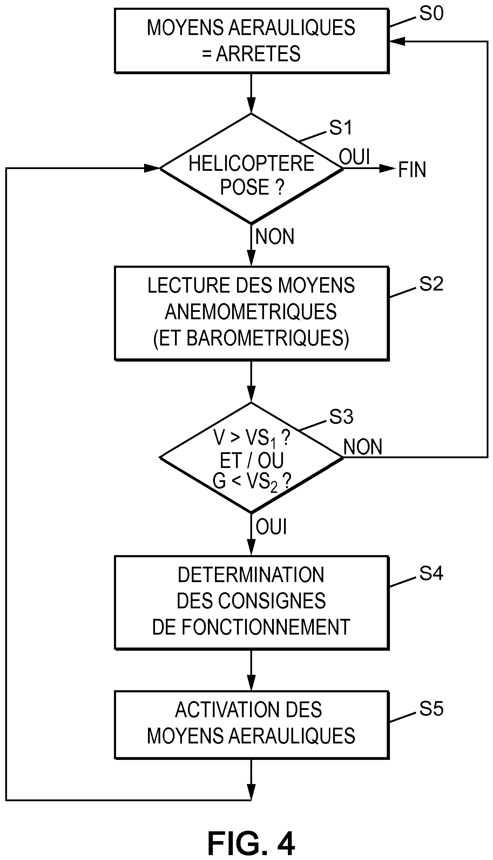

Pour un mode de contrôle prédéterminé, le contrôleur 7 transmet initialement une consigne de fonctionnement aux moyens aérauliques, et ceux-ci produisent un fonctionnement constant qui est conforme à cette consigne initiale. Cette consigne peut comprendre une sélection des moyens aérauliques à activer, des valeurs de vitesse et de fréquence de soufflage d'air, une ou plusieurs valeur(s) de vitesse d'aspiration d'air, et/ou une ou plusieurs valeur(s) d'orientation de jets et de déflecteurs. La consigne peut être soit fixe et indépendante des valeurs reçues par le contrôleur 7, soit variable et déterminée en fonction de plusieurs de ces valeurs reçues. Par exemple, la consigne, qui peut concerner plusieurs paramètres de fonctionnement des moyens aérauliques, peut être déterminée en lisant une table ou une cartographie dont les entrées sont constituées par les valeurs reçues, celles-ci pouvant être relatives à toutes les données qui ont été énumérées plus haut ou seulement une partie d'entre elles. L'utilisation des résultats des mesures des sondes barométriques 3 peut être particulièrement pertinente, notamment pour caractériser la taille initiale de la bulle de recirculation d'air RC. [Fig. 4] montre un exemple possible de mode de contrôle prédéterminé. Le processus de contrôle des conditions aérauliques qui sont présentes au-dessus de la zone d'arrivée aérienne Z peut être démarré lorsqu'un aéronef est déclaré en approche pour apponter. Dans l'état initial, correspondant à la référence S0, les moyens aérauliques sont coupés. L'étape S1 peut consister en une vérification de l'état d'avancement de l'appontage de l'hélicoptère 20, et le processus n'est poursuivi que si cet appontage n'a pas encore eu lieu. L'étape S2 consiste en la collecte des valeurs de vitesse V et de gisement G qui caractérisent le vent, telles que transmises par les moyens anémométriques. Possiblement, des valeurs additionnelles peuvent aussi être collectées à cette étape S2, notamment les valeurs de pression délivrées par les sondes barométriques 3, ainsi que d'autres données telles que celles déjà énumérées. L'étape S3 est le test de vérification des conditions nécessaires pour activer les moyens aérauliques, qui porte sur les valeurs de la vitesse V et du gisement G du vent. Le processus n'est alors poursuivi que si la valeur de vitesse V est supérieure au premier seuil, noté VS₁ dans la figure, et/ou si la valeur du gisement G est inférieure au second seuil, noté VS₂. Les consignes de fonctionnement des moyens aérauliques sont déterminées à l'étape S4, puis les moyens aérauliques sont activés conformément à ces consignes à l'étape S5. Par exemple, lorsque les moyens aérauliques comprennent des moyens de soufflage, l'étape S4 peut comprendre de fixer une force de fonctionnement de ceux-ci pour laquelle la vitesse de soufflage d'air est comprise entre 0,4 fois et 3 fois la vitesse du vent telle que mesurée par les moyens anémométriques 2. Une force de fonctionnement de moyens d'aspiration peut être fixée de la même façon, par exemple avec une vitesse d'aspiration d'air qui est aussi comprise entre 0,4 fois et 3 fois la vitesse du vent. Le processus peut alors être répété à partir de l'étape S1.

Pour un mode de contrôle adaptatif, le contrôle du fonctionnement des moyens aérauliques est effectué en boucle fermée. Pour cela, le contrôleur 7 est un contrôleur adaptatif, par exemple du type Armarkov. Les valeurs de pression mesurées en temps réel par les sondes barométriques 3 peuvent constituer les données d'entrée de l'algorithme d'Armarkov, et les données de sortie de l'algorithme peuvent être l'identification de ceux des moyens aérauliques qui sont à activer, les valeurs de vitesse et de fréquence de soufflage pour ceux-ci, ou éventuellement les valeurs de vitesse d'aspiration et/ou les orientations de jets et/ou de déflecteurs d'air. Une mesure d'écart entre les conditions aérauliques qui sont ainsi créées au-dessus de la zone d'arrivée aérienne Z et un état de référence qui est utilisé comme cible, est réinjectée en entrée de l'algorithme jusqu'à atteindre un critère d'arrêt. Un tel critère d'arrêt peut porter par exemple sur une réduction de fluctuations des valeurs de pression telles que détectées par les sondes barométriques 3, ou sur une augmentation des valeurs de pression statique qui existent sur le pourtour de la zone d'arrivée aérienne Z.

Un mode de contrôle prédéterminé peut être préféré par temps calme pour l'application de l'invention au navire 10, alors qu'un mode de contrôle adaptatif peut être préféré par mer agitée, temps fort ou en présence de rafales de vent.

Il est entendu que l'invention peut être reproduite en modifiant des aspects secondaires des modes de réalisation qui ont été décrits en détail ci-dessus, tout en conservant certains au moins des avantages cités. Notamment, le système de l'invention peut être utilisé pour des applications autres que l'appontage sur un navire. De telles autres applications peuvent être terrestres, quelle que soit la nature de la superstructure qui est contigüe à la zone d'arrivée aérienne. En outre, toutes les valeurs numériques qui ont été citées ne l'ont été qu'à titre d'illustration, et peuvent être changées en fonction de l'application considérée.

## Revendications

1. Système de contrôle de conditions aérauliques qui sont présentes au-dessus d'une surface d'atterrissage ou d'appontage d'aéronef, appelée zone d'arrivée aérienne (Z), le système étant adapté pour être utilisé lorsque la zone d'arrivée aérienne est située à proximité d'une superstructure (1), selon un axe d'alignement (DA) qui est orienté de la zone d'arrivée aérienne vers la superstructure, la superstructure dépassant verticalement plus haut que la zone d'arrivée aérienne et étant susceptible d'altérer un écoulement du vent au-dessus de la zone d'arrivée aérienne, ledit système comprenant :
- des moyens anémométriques, adaptés pour fournir des valeurs de vitesse (V) et de gisement (G) qui caractérisent une vitesse relative du vent par rapport à la zone d'arrivée aérienne (Z) et la superstructure (1),
le système étant **caractérisé en ce qu'**il comprend en outre :
- des moyens aérauliques, qui sont agencés à proximité de la zone d'arrivée aérienne (Z), et capables de modifier des déplacements d'air au-dessus de ladite zone d'arrivée aérienne ; et
- un contrôleur (7), adapté pour activer les moyens aérauliques lorsqu'est satisfaite l'une au moins des deux conditions suivantes : la valeur de vitesse (V) qui est fournie par les moyens anémométriques est supérieure à un premier seuil non-nul, et la valeur de gisement (G) qui est fournie par lesdits moyens anémométriques est inférieure à un second seuil non-nul en valeur absolue.

2. Système selon la revendication 1, dans lequel le premier seuil (VS₁) est compris entre 5 m·s⁻¹ et 20 m·s⁻¹, et le second seuil (VS₂) est compris entre 0° et 90°.

3. Système selon la revendication 1 ou 2, dans lequel les moyens anémométriques sont adaptés pour mesurer les valeurs de vitesse (V) et de gisement (G) qui caractérisent la vitesse relative du vent par rapport à la zone d'arrivée aérienne (Z) et la superstructure (1).

4. Système selon l'une quelconque des revendications précédentes, dans lequel les moyens aérauliques comprennent certains au moins parmi des moyens de soufflage continu ou intermittent, des moyens d'aspiration continue ou intermittente, et des moyens de déflexion de flux d'air, et sont disposés à au moins un endroit d'un pourtour d'une face (F) de la superstructure (1) qui est tournée vers la zone d'arrivée aérienne (Z).

5. Système selon la revendication 4, dans lequel les moyens aérauliques comprennent des moyens de soufflage et/ou d'aspiration disposés le long d'un bord supérieur (11) sensiblement horizontal de la face (F) de la superstructure (1) qui est tournée vers la zone d'arrivée aérienne (Z), et le contrôleur (7) est adapté pour activer les moyens aérauliques lorsque la valeur de vitesse (V) fournie par les moyens anémométriques est supérieure au premier seuil (VS₁), et lorsque la valeur absolue du gisement (G) fournie par lesdits moyens anémométriques est inférieure à un troisième seuil, de façon à abaisser une limite supérieure (L₁₁) d'une bulle de recirculation d'air (RC) qui est générée par le vent au-dessus de la zone d'arrivée aérienne, ou pour augmenter une inclinaison (α₁₁) vers le bas de ladite limite supérieure de bulle de recirculation d'air à partir du bord supérieur de la face de la superstructure.

6. Système selon la revendication 5, dans lequel le troisième seuil est compris entre 0° et 10°.

7. Système selon la revendication 4, dans lequel les moyens aérauliques comprennent des moyens de soufflage et/ou d'aspiration disposés le long de bords latéraux (12, 13) sensiblement verticaux de la face (F) de la superstructure (1) qui est tournée vers la zone d'arrivée aérienne (Z), et le contrôleur (7) est adapté pour activer au moins une partie des moyens aérauliques lorsque la valeur de vitesse (V) fournie par les moyens anémométriques est supérieure à un quatrième seuil non-nul, et lorsque la valeur du gisement (G) fournie par lesdits moyens anémométriques est supérieure à un cinquième seuil non-nul et inférieure à 90°, en valeur absolue, de façon à réduire un angle (α₁₂) entre la face de la superstructure qui est tournée vers la zone d'arrivée aérienne et une limite d'une bulle de recirculation d'air qui est générée par le vent au-dessus d'une partie de la zone d'arrivée aérienne, ladite bulle de recirculation d'air étant contenue dans ledit angle, et ledit angle étant mesuré au niveau de celui des bords latéraux sensiblement verticaux qui est d'un même côté que la direction de provenance du vent par rapport à l'axe d'alignement (DA).

8. Système selon la revendication 7, dans lequel le quatrième seuil est compris entre 5 m·s⁻¹ et 20 m·s⁻¹, et le cinquième seuil est compris entre 10° et 90°.

9. Système selon la revendication 4, dans lequel les moyens aérauliques comprennent des moyens de soufflage et/ou d'aspiration disposés à des angles latéraux supérieurs de la face (F) de la superstructure (1) qui est tournée vers la zone d'arrivée aérienne (Z), et le contrôleur (7) est adapté pour activer les moyens aérauliques lorsque la valeur de vitesse (V) fournie par les moyens anémométriques est supérieure à un sixième seuil non-nul, et la valeur du gisement (G) fournie par lesdits moyens anémométriques est inférieure à 5° en valeur absolue, de façon à perturber des tourbillons (VX) générés par le vent à partir des angles latéraux supérieurs de la face de la superstructure.

10. Système selon l'une quelconque des revendications précédentes, dans lequel le contrôleur (7) est adapté pour ajuster en temps réel un fonctionnement des moyens aérauliques en fonction de valeurs de pression mesurées répétitivement par des moyens barométriques qui sont situés à proximité de la zone d'arrivée aérienne (Z).

11. Structure aménagée comprenant :
- une zone d'arrivée aérienne (Z), adaptée pour qu'un aéronef, en particulier un hélicoptère (20) ou un drone à axes de rotors verticaux, se pose sur ladite zone d'arrivée aérienne ;
- une superstructure (1) qui est située à proximité de la zone d'arrivée aérienne (Z), la superstructure dépassant verticalement plus haut que la zone d'arrivée aérienne et étant susceptible d'altérer un écoulement de vent au-dessus de ladite zone d'arrivée aérienne ; et
- un système de contrôle de conditions aérauliques qui sont présentes au-dessus de la zone d'arrivée aérienne (Z), ledit système étant conforme à l'une quelconque des revendications précédentes.

12. Structure selon la revendication 11, constituant l'une parmi :
- une partie d'un navire (10), notamment une partie d'un pont arrière de navire ;
- une partie d'une plateforme d'appontage et de décollage d'un porte-avion ;
- une partie d'une plateforme off-shore ;
- une partie d'un immeuble, la structure pouvant notamment être située sur une tour ou un bâtiment d'hôpital ; et
- une partie d'un aéroport, aérodrome ou héliport.

## Patentansprüche

1. System zur Überwachung der Luftbedingungen, die über einer Lande- oder Decklandefläche eines Flugzeugs, als Luftanströmbereich (Z) bezeichnet, herrschen, wobei das System dazu geeignet ist, verwendet zu werden, wenn sich der Luftanströmbereich in der Nähe eines Aufbaus (1) befindet, und zwar entlang einer Ausrichtungsachse (DA), die vom Luftanströmbereich zum Aufbau ausgerichtet ist, wobei der Aufbau vertikal höher als der Luftanströmbereich übersteht und einen Windstrom über dem Luftanströmbereich verändern kann, wobei das System Folgendes umfasst:
- anemometrische Mittel, die dazu geeignet sind, einen Geschwindigkeitswert (V) und einen Azimutwert (G) zu liefern, die eine relative Windgeschwindigkeit im Verhältnis zum Luftanströmbereich (Z) und zum Aufbau (1) kennzeichnen,
wobei das System **dadurch gekennzeichnet ist, dass** es ferner Folgendes umfasst:
- lufttechnische Mittel, die in der Nähe des Luftanströmbereichs (Z) angeordnet und in der Lage sind, Luftbewegungen über dem Luftanströmbereich zu verändern; und
- eine Steuerung (7), die dazu geeignet ist, die lufttechnischen Mittel zu aktivieren, wenn mindestens eine der beiden folgenden Bedingungen erfüllt ist: der Geschwindigkeitswert (V), der von den anemometrischen Mitteln bereitgestellt wird, ist größer als ein erster Schwellenwert, der nicht Null ist, und der Azimutwert (G), der von den anemometrischen Mitteln bereitgestellt wird, ist kleiner als ein zweiter Schwellenwert, der nicht Null ist, als absoluter Wert ist.

2. System nach Anspruch 1, wobei der erste Schwellenwert (VS₁) zwischen 5 m.s⁻¹ und 20 m.s⁻¹ liegt, und der zweite Schwellenwert (VS₂) zwischen 0° und 90° liegt.

3. System nach Anspruch 1 oder 2, wobei die anemometrischen Mittel dazu geeignet sind, den Geschwindigkeitswert (V) und den Azimutwert (G) zu messen, die die relative Windgeschwindigkeit in Bezug auf den Luftanströmbereich (Z) und den Aufbau (1) kennzeichnen.

4. System nach einem der vorhergehenden Ansprüche, wobei die lufttechnischen Mittel mindestens einige aus kontinuierlichen oder intermittierenden Gebläsemitteln, kontinuierlichen oder intermittierenden Ansaugmitteln und Luftstromumlenkmitteln umfassen und an mindestens einer Stelle um einen Umfang einer Fläche (F) des Aufbaus (1) angeordnet sind, die in Richtung des Luftanströmbereichs (Z) ausgerichtet ist.

5. System nach Anspruch 4, wobei die lufttechnischen Mittel Gebläse- und/oder Ansaugmittel umfassen, die entlang einer im Wesentlichen horizontalen oberen Kante (11) der zum Luftanströmbereich (Z) hin ausgerichteten Fläche (F) des Aufbaus (1) angeordnet sind, und die Steuerung (7) dazu geeignet ist, die lufttechnischen Mittel zu aktivieren, wenn der Geschwindigkeitswert (V), der von den anemometrischen Mitteln bereitgestellt wird, größer als der erste Schwellenwert (VS₁) ist, und wenn der absolute Azimutwert (G), der von den anemometrischen Mitteln bereitgestellt wird, kleiner als ein dritter Schwellenwert ist, um eine obere Grenze (L₁₁) einer Luftumwälzblase (RC), die durch den Wind über dem Luftanströmbereich erzeugt wird, abzusenken oder um eine Neigung (α₁₁) nach unten von der oberen Kante der Fläche des Aufbaus bis zur oberen Grenze der Luftumwälzblase zu erhöhen.

6. System nach Anspruch 5, wobei der dritte Schwellenwert zwischen 0° und 10° liegt.

7. System nach Anspruch 4, wobei die lufttechnischen Mittel Gebläse- und/oder Ansaugmittel umfassen, die entlang von seitlichen Rändern (12, 13) im Wesentlichen vertikal von der zum luftseitigen Luftanströmbereich (Z) hin ausgerichteten Fläche (F) des Aufbaus (1) angeordnet sind, und die Steuerung (7) dazu geeignet ist, mindestens einen Teil der lufttechnischen Mittel zu aktivieren, wenn der Geschwindigkeitswert (V), der von den anemometrischen Mitteln bereitgestellt wird, größer als ein vierter Schwellenwert ist, der nicht Null ist, und wenn der Azimutwert (G), der von den anemometrischen Mitteln bereitgestellt wird, größer als ein fünfter Schwellenwert, der nicht Null ist, und kleiner als 90° als absoluter Wert ist, so dass sich ein Winkel (α₁₂) zwischen der Fläche des Aufbaus, die zum Luftanströmbereich hin ausgerichtet ist, und einer Grenze einer Luftumwälzblase, die durch den Wind über einem Teil des Luftanströmbereichs erzeugt wird, verringert, wobei die Luftumwälzblase in dem Winkel enthalten ist, und wobei der Winkel an dem einen der im Wesentlichen vertikalen Seitenränder gemessen wird, die sich auf der gleichen Seite wie die Richtung befindet, aus der der Wind im Verhältnis zur Ausrichtungsachse (DA) kommt.

8. System nach Anspruch 7, wobei der vierte Schwellenwert zwischen 5 m.s⁻¹ und 20 m.s⁻¹ liegt und der fünfte Schwellenwert zwischen 10° und 90° liegt.

9. System nach Anspruch 4, wobei die lufttechnischen Mittel Gebläse- und/oder Ansaugmittel umfassen, die an oberen seitlichen Winkeln der zum Luftanströmbereich (Z) hin ausgerichteten Fläche (F) des Aufbaus (1) angeordnet sind, und die Steuerung (7) dazu geeignet ist, die lufttechnischen Mittel zu aktivieren, wenn der Geschwindigkeitswert (V), der von den anemometrischen Mitteln bereitgestellt wird, größer als ein sechster Schwellenwert ist, der nicht null ist, und der Azimutwert (G), der von den anemometrischen Mitteln bereitgestellt wird, kleiner als 5° als absoluter Wert ist, um Wirbel (VX) zu beeinflussen, die durch den Wind aus den oberen seitlichen Winkeln der Fläche des Aufbaus erzeugt werden.

10. System nach einem der vorhergehenden Ansprüche, wobei die Steuerung (7) dazu geeignet ist, in Echtzeit einen Betrieb der lufttechnischen Mittel in Abhängigkeit von Druckwerten einzustellen, die wiederholt von barometrischen Mitteln gemessen werden, die sich in der Nähe des Luftanströmbereichs (Z) befinden.

11. Angelegte Struktur, die Folgendes umfasst:
- einen Luftanströmbereich (Z), der geeignet ist, dass ein Flugzeug, insbesondere ein Hubschrauber (20) oder eine Drohne mit vertikalen Rotorachsen, auf dem Luftanströmbereich landet;
- einen Aufbau (1), der sich in der Nähe des Luftanströmbereichs (Z) befindet, wobei der Aufbau vertikal höher als der Luftanströmbereich übersteht und einen Windstrom über dem Luftanströmbereich verändern kann; und
- ein System zur Überwachung der lufttechnischen Bedingungen, die oberhalb des Luftanströmbereichs (Z) herrschen, wobei das System einem der vorhergehenden Ansprüche entspricht.

12. Struktur nach Anspruch 11, die eines von Folgendem bildet:
- einen Teil eines Schiffes (10), insbesondere einen Teil eines Schiffsheckes;
- einen Teil einer Lande- und Startplattform eines Flugzeugträgers;
- einen Teil einer Offshore-Plattform;
- einen Teil eines Gebäudes, wobei sich die Struktur insbesondere auf einem Turm oder einem Krankenhausgebäude befinden kann; und
- einen Teil eines Flughafens, Flugfeldes oder Hubschrauberlandeplatzes.

## Claims

1. System for controlling aeraulic conditions that are present above an aircraft landing or deck-landing surface, referred to as the aerial arrival zone (Z), the system being suitable for use when the aerial arrival zone is located close to a superstructure (1), along an alignment axis (DA) which is oriented from the aerial arrival zone towards the superstructure, the superstructure extending vertically higher than the aerial arrival zone and being capable of altering a wind flow above the aerial arrival zone, said system comprising:
- anemometric means, adapted to provide speed (V) and bearing angle (G) values, which characterise a relative wind speed with respect to the aerial arrival zone (Z) and the superstructure (1),
the system being **characterised in that** it further comprises:
- aeraulic means, which are arranged close to the aerial arrival zone (Z), and are capable of modifying air movements above said aerial arrival zone; and
- a controller (7), adapted to activate the aeraulic means when at least one of the following two conditions is met: the speed value (V) which is provided by the anemometric means is greater than a first non-zero threshold, and absolute value of the bearing angle (G) which is provided by said anemometric means is less than a second non-zero threshold.

2. System according to claim 1, wherein the first threshold (VS₁ ) is between 5 m .s ⁻¹ and 20 m .s ⁻¹, and the second threshold (VS₂ ) is between 0° and 90°.

3. System according to claim 1 or 2, wherein the anemometric means are adapted to measure the speed (V) and bearing angle (G) values, which characterise the relative wind speed in relation to the aerial arrival zone (Z) and the superstructure (1).

4. System according to any one of the preceding claims, wherein the aeraulic means comprise at least some of the following: continuous or intermittent blowing means, continuous or intermittent suction means, and airflow deflection means, and are arranged in at least one location around a circumference of a face (F) of the superstructure (1) which is oriented towards the aerial arrival zone (Z).

5. System according to claim 4, wherein the aeraulic means comprise blowing and/or suction means disposed along a substantially horizontal upper edge (11) of the face (F) of the superstructure (1), which is oriented towards the aerial arrival zone (Z), and the controller (7) is adapted to activate the aeraulic means when the speed value (V) supplied by the anemometric means is greater than the first threshold (VS₁ ), and when the absolute value of the bearing angle (G) supplied by said anemometric means is less than a third threshold, so as to lower an upper limit (L₁₁ ) of an air recirculation bubble (RC) which is generated by the wind above the aerial arrival zone, or to increase a downward inclination (α₁₁) of said upper limit of the air recirculation bubble which starts from the upper edge of the face of the superstructure.

6. System according to claim 5, wherein the third threshold is between 0° and 10°.

7. System according to claim 4, wherein the aeraulic means comprise blowing and/or suction means disposed along substantially vertical lateral edges (12, 13) of the face (F) of the superstructure (1) which is oriented towards the aerial arrival zone (Z), and the controller (7) is adapted to activate at least a portion of the aeraulic means when the speed value (V) supplied by the anemometric means is greater than a fourth non-zero threshold, and when the absolute value of the bearing angle (G) supplied by said anemometric means is greater than a fifth non-zero threshold and less than 90°, so as to reduce an angle (α₁₂ ) between the face of the superstructure which is oriented towards the aerial arrival zone and a limit of an air recirculation bubble which is generated by the wind above a portion of the aerial arrival zone, said air recirculation bubble being contained within said angle, and said angle being measured at one of the substantially vertical lateral edges which is on the same side as the direction from which the wind is coming with respect to the alignment axis (DA).

8. System according to claim 7, wherein the fourth threshold is between 5 m .s ⁻¹ and 20 m .s ⁻¹, and the fifth threshold is between 10° and 90°.

9. System according to claim 4, wherein the aeraulic means comprise blowing and/or suction means disposed at upper lateral angles of the face (F) of the superstructure (1) which is oriented towards the aerial arrival zone (Z), and the controller (7) is adapted to activate the aeraulic means when the speed value (V) supplied by the anemometric means is greater than a sixth non-zero threshold, and the absolute value of the bearing angle (G) supplied by said anemometric means is less than 5°, so as to disrupt vortices (VX) generated by the wind from the upper side angles of the face of the superstructure.

10. System according to any one of the preceding claims, wherein the controller (7) is adapted to adjust an operation of the aeraulic means in real time according to pressure values repeatedly measured by barometric means located close to the aerial arrival zone (Z).

11. Landscaped structure comprising:
- an aerial arrival zone (Z), suitable for an aircraft, in particular a helicopter (20) or a drone with vertical rotor axes, to land on said aerial arrival zone;
- a superstructure (1) that is located close to the aerial arrival zone (Z), the superstructure extending vertically higher than the aerial arrival zone and being capable of altering a wind flow above said aerial arrival zone; and
- a system for controlling aeraulic conditions that are present above the aerial arrival zone (Z), said system complying with any one of the preceding claims.

12. Structure according to claim 11, constituting one of the following:
- a part of a ship (10), in particular a part of a ship's rear deck;
- a part of an aircraft carrier's flight deck for take-off and landing;
- part of an offshore platform;
- a part of a building, the structure being located in particular on a tower or a hospital building; and
- a part of an airport, airfield or heliport.
